Europäisches Patentamt

European Patent Office

Office européen des brevets

(11) Publication number: **0 146 153**
**A1**

## (12) EUROPEAN PATENT APPLICATION

(21) Application number: 84201463.1

(22) Date of filing: **11.10.84**

(51) Int. Cl.⁴: **A 23 N 7/00**

(30) Priority: **12.10.83 NL 8303496**

(43) Date of publication of application: **26.06.85**
Bulletin 85/26

(84) Designated Contracting States: **AT BE CH DE FR GB IT LI LU NL SE**

(71) Applicant: **Kiremko B.V., Steenovenweg 9 P.O. Box 5, NL-3417 ZG Montfoort (NL)**

(72) Inventor: **Zwinkels, Martinus Cornelus Hendrikus, Wulverhorst 111, NL-3417 TJ Montfoort (NL)**

(74) Representative: **Noz, Franciscus Xaverius, Ir. et al, Boschdijk 155 P.O. Box 645, NL-5600 AP Eindhoven (NL)**

(54) **Steam peeling device.**

(57) A steam-peeling device comprising an elongate vessel adapted to rotate about an at least substantially horizontal axis and having near one end a closable opening for introducing and removing products to be processed, comprising means for feeding steam into the vessel and means for removing condensate from the space in the vessel receiving the products, whilst near the end of the vessel remote from the closable opening a grating is arranged in the vessel at a given distance from the bottom of the vessel and between the bottom and the grating a plate is fastened by its circumferential edge to the inner wall of the vessel, the central part of said plate having a passage being located at a larger distance from the grating than the part adjoining the inner wall of the vessel.

0146153

- 1 -

Steam peeling device.

The invention relates to a steam peeling device comprising an elongate vessel adapted to rotate about an at least substantially horizontal axis and having near one end of the vessel a  closable  opening for introducing and removing products to be processed, comprising means for feeding steam into the vessel and means for removing condensate from the space in the vessel receiving the products.

Such a steam peeling device is known from European Patent Application 0078587. In this known device a blade-shaped member is fastened near the outlet opening in the vessel to the wall of the vessel and connected with an outlet duct. The object is that with the aid of the blade-shaped member condensate is "ladled up" during the rotation of the vessel and conducted away through the duct.

When using such a construction it can, however, not be guaranteed that the condensate contained in the vessel will, indeed, be picked up by the blade-shaped member and will not flow on both sides of the blade-shaped member along the wall of the vessel, whilst the blade-shaped member constitutes, moreover, a troublesome extension in the vessel which may give rise to damage of the products to be processed.

According to the invention a grating is arranged near the end of the vessel remote from the  closable  opening in the vessel at a given distance from the bottom of the vessel and between the bottom and the grating a plate is fastened by its circumference edge to the inner wall of the vessel, the central part of said plate having a passage being located at a larger distance from the grating than the part adjoining the inner wall of the vessel.

When the vessel, its closable opening being upwardly directed, is filled with the products to be processed and steam is introduced, the condensate formed by the contact of the steam with the then still cold products can readily flow via the grating and along the plate through the passage in the central part into the space between said plate and the bottom of the vessel. When subsequently the device is caused to rotate, the design of the plate arranged between the grating and the bottom of the vessel will prevent condensate from flowing back into the space containing the products to be processed. Both during the initial introduction of steam and during the rotation of the vessel it is avoided that a portion of the products to be processed should lie in the condensate so that the quality of the processed products is appreciably improved.

It is noted that from Dutch Patent Application 7602874 there is known a steam peeling device in which through a duct a second smaller auxiliary vessel is connected with the bottom of the vessel. This auxiliary vessel serves for collecting water introduced into the vessel prior to filling in order to avoid damage of the products during filling. This water has to be introduced into the auxiliary vessel during the steaming phase. This construction is, however, not suitable for collecting condensate in a device rotated during steaming, since during rotation the water will flow back from the auxiliary vessel into the vessel containing the producers to be processed.

From Dutch Patent Application 7812678 there is furthermore known a steam peeler in which the vessel is provided with a grating forming part of a stirring device. In this case condensate can be collected below said grating. However, this device is not suitable either for rotating about a horizontal axis during operation, since then the condensate would freely flow back and forth in the vessel.

The invention will be described more fully hereinafter with reference to the accompanying drawings schematically showing an embodiment of a steam peeler in accordance with the invention.

Fig. 1 is a schematic sectional view of an embodiment of a steam peeler in accordance with the invention.

Fig. 2 is a cross-sectional view of the device of Fig. 1.

As is shown in the Figures the steam peeler comprises a more or less elongate vessel 1 closed at one end by a bottom 2. Near the other end of the vessel an opening 3 is provided, which can be closed by means of a cover 4 fastened to an arm 5, which is pivotable about a shaft 6 with the aid of setting means. A filling funnel 7 adjoins the opening 3.

The outer side of the wall of the vessel 1 has fastened to it two aligned stub shafts 8 and 9, with the aid of which the vessel 1 is rotatably supported in a frame (not shown) so that with the aid of driving means (not shown) the vessel can be rotated about an at least substantially horizontal axis formed by the registering centre lines of the stub shafts 8 and 9.

The stub shaft 9 is hollow so that through this stub shaft steam can be introduced into the interior of the vessel 1. In order to ensure unhindered supply of steam a plurality of grating rods 10 are fastened to the wall of the vessel in the interior of the vessel at the level of the stub shaft 9 so that a space 11 is screened between the wall of the vessel and the grating rods 10, into which space the products to be processed in the vessel cannot penetrate.

From the Figures it is furthermore apparent that at a short distance from the bottom 2 inside the vessel there is arranged a grating 12 also formed by rods in the embodiment shown. Between the grating 12 and the bottom 2 there is arranged a plate 13 having the shape of a conical sheath 13, the circumferential edge of which is fastened at the level of the grating 12 to the inner wall of the vessel 1. In the centre the plate 13 has a passage bounded by an edge 14 concentric with the centre line of the vessel. As will be apparent from the Figures this passage is spaced apart from the grating 12 by a larger distance than the circumferential edge of the plate 13 fastened to the inner wall of the vessel 1.

The bottom of the vessel is furthermore provided with an outlet stub 16 that can be closed by a closing member 15 so that a fluid or the like contained in the space between the plate 13 and the bottom 2 can be conducted away through said outlet stub 16, when the closing member 15 is opened.

- 4 -

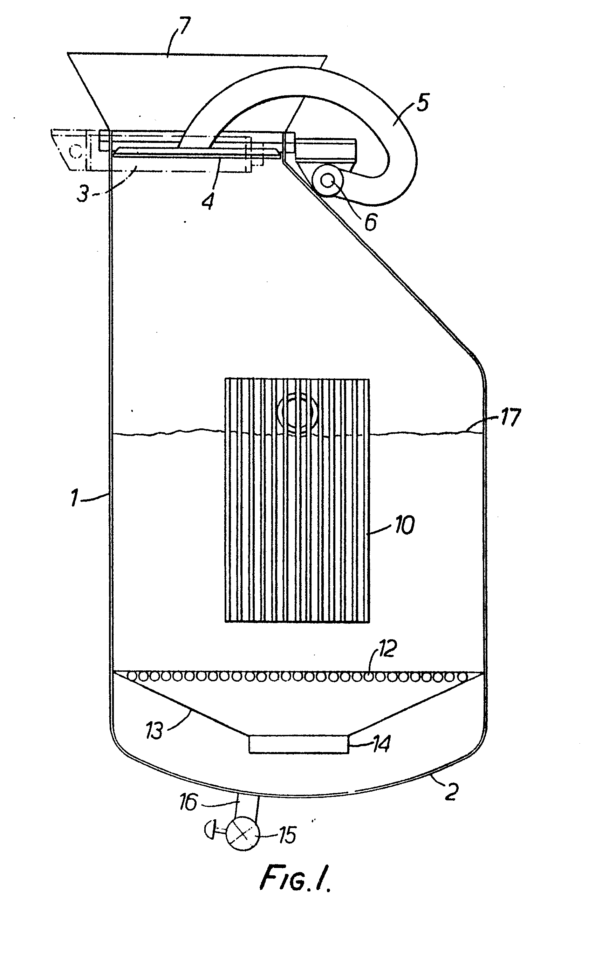

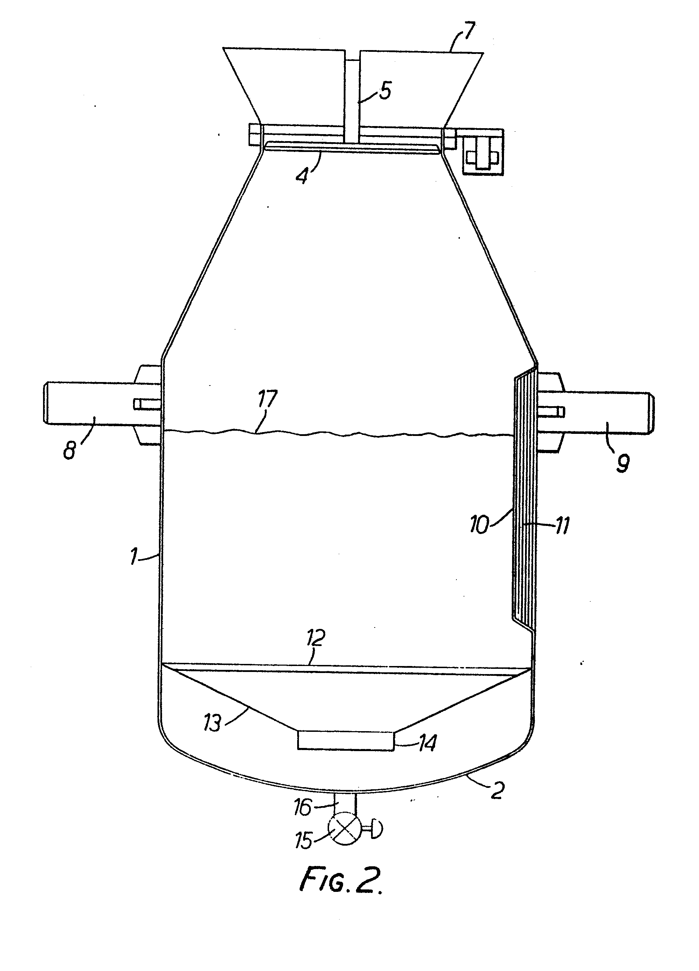

For filling the steam peeler with products to be processed it is disposed in the position shown in Figs. 1 and 2. The products, for example, potatoes to be peeled are charged up to approximately the level indicated by the line 17. Subsequently the vessel is closed and steam can be allowed to enter through the hollow stub shaft 9. The steam coming into contact with the still cold products will condense at least partly and this condensate can rapidly flow away through the grating 12 and along the plate 13 into the space between the plate 13 and the bottom 2. When subsequently the vessel is caused to rotate, the specific shape of the plate 13 prevents the condensate contained in the space between the plate 13 and the bottom 2 from flowing back during the rotation into the part of the vessel containing the products.

After the closing member 15 is opened, which may be remote-controllable, the condensate may be blown out, as the case may be, by the pressure of the steam contained in the vessel. If necessary, an outlet duct may be connected with the closing member 15, which duct may be connected by means of a rotary coupling on the rotary shaft of the vessel or the like with a further, stationary outlet duct.

After the products have been exposed to the action of the steam to a sufficient extent, the steam can be conducted away through the hollow stub shaft 9 and after the pressure in the vessel has dropped the cover 4 can be opened for removing the products through the opening 3 from the vessel.

The reference numerals in the Claims should not have any limitative effect on the interpretation thereof and only serve for the sake of clarity.

- 1 -

CLAIMS.

1. A steam peeling device comprising an elongate vessel (1) adapted to rotate about an at least substantially horizontal axis (8, 9) and having near one end of the vessel a closable opening (3) for introducing and removing the products to be processed, comprising means for feeding steam into the vessel and means for removing condensate from the space of the vessel receiving the products characterized in that near the end of the vessel (1) remote from the closable opening (3) a grating (12) is arranged inside the vessel (1) at a given distance from the bottom (2) of the vessel (1) and between the bottom (2) and the grating (12) a plate (13) is fastened by its circumferential edge to the inner wall of the vessel (1), the central part of said plate having a passage (14) being located at a larger distance from the grating (12) than the part adjoining the inner wall of the vessel.

2. A steam peeling device as claimed in Claim 1 characterized in that the plate (13) constitutes part of a conical sheath.

3. A steam peeling device as claimed in Claim 1 or 2 characterized in that an outlet duct (16) that can be closed by means of a closing member (15) is connected with the bottom (2) of the vessel (1).

0146153

Fig.1.

0146153

FIG. 2.

# European Patent Office

## EUROPEAN SEARCH REPORT

EP 84 20 1463

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | NL-A-78 12 678 (GOUDSCHE MASCHINE-FABRIEK B.V.) <br><br> * Page 2, line 34 - page 3, line 18; figure 1 * <br><br> --- | 1 | A 23 N 7/00 |
| D,A | EP-A-0 078 587 (FLORIGO IND.) <br><br> --- | | |
| D,A | NL-A-76 02 874 (P. KUNZ) <br><br> ----- | | |
| | | | **TECHNICAL FIELDS SEARCHED (Int. Cl.4)** <br><br> A 23 N |

The present search report has been drawn up for all claims

| Place of search | Date of completion of the search | Examiner |
|---|---|---|
| THE HAGUE | 22-02-1985 | NEHRDICH H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82